# FASCICULE DE BREVET EUROPEEN

(11) **EP 2 306 107 B1**
(45) Date de publication et mention de la délivrance du brevet: **09.01.2019**
(21) Numéro de dépôt: 10306016.6
(22) Date de dépôt: 22.09.2010
(51) Int. Cl.: F24F 12/00, F24F 5/00, F24H 6/00, F24D 17/02

(54) **Système et procédé de ventilation double flux de production d'eau chaude sanitaire et de chauffage compact à pompe à chaleur intégrée**
System und Verfahren zur Be- und Entlüftung für die Heißwasserbereitung für den Haushalt und zur Kompaktheizung mit integrierter Wärmepumpe
Double-flow ventilation system and method for domestic hot water production and compact heating with built-in heat pump

(30) Priorité: 24.09.2009 FR 0956609
(43) Date de publication de la demande: 06.04.2011
(73) Titulaire: Eiffage Construction, 78140 Vélizy-Villacoublay (FR)
(72) Inventeur: Noble, Michel, 49080 Bouchemaine (FR)
(74) Mandataire: Jacobacci Coralis Harle

(56) Documents cités:
- EP-A1- 0 055 000
- WO-A1-02/065026
- WO-A1-2007/138954
- WO-A1-2009/000974
- DE-A1- 10 058 273
- US-A- 6 038 879

## Description

La présente invention concerne un système hygiénique et économique de ventilation double flux de production d'eau chaude sanitaire et de chauffage compact à pompe à chaleur intégrée, ainsi qu'un procédé de mise en oeuvre. Elle a des applications dans le domaine de la construction et/ou rénovation de bâtiments et notamment de logements d'habitation.

Les nouvelles constructions et notamment les logements d'habitation, doivent répondre à des normes d'isolation, en particulier thermique, de plus en plus sévères. De même, du fait du coût du chauffage aussi bien des locaux en eux-mêmes que de l'eau chaude sanitaire, les particuliers ou collectivités sont amenés lors de rénovations à choisir des équipements plus performants et à améliorer l'isolation des bâtiments anciens.

On constate donc progressivement une baisse des déperditions calorifiques des bâtiments. Il en résulte une demande moindre en chauffage. Par exemple, on a constaté sur des logements témoins entre deux et quatre pièces, que les déperditions de chaleur étaient comprises entre 1 kW et 4 kW selon la région climatique. Or les équipements de chauffage classiques sont largement surdimensionnés en terme de puissance par rapport à ces pertes. Par exemple une chaudière murale au gaz est capable de délivrer une puissance calorifique de 24 kW en général. Une telle chaudière apparaît donc largement surdimensionnée par rapport à l'utilisation habituelle qui en est faite.

Il serait donc souhaitable de pouvoir disposer de moyens de chauffage plus adaptés à ces besoins plus réduits et qui puisse, en plus, utiliser des sources de chauffage plus naturelles que le gaz et/ou le pétrole et ses dérivés. On pense en particulier aux capacités calorifiques de l'air dans son utilisation avec une pompe à chaleur.

C'est ainsi qu'il est proposé d'utiliser une pompe à chaleur utilisant de l'air, aussi bien air extérieur qu'intérieur au local, pour à la fois chauffer par air chaud ledit local que pour permettre la production d'eau chaude sanitaire. De plus, du fait des besoins énergétiques plus réduits, le système proposé est intégré sous un volume réduit et il peut être installé/mis en oeuvre facilement. Il en résulte une réduction du coût de fabrication, d'installation/mise en oeuvre et, ensuite, d'utilisation.

On connaît par les documents WO2007/138954, EP 0 055 00, WO2009/000974, DE 100 58 273 des systèmes de chauffage de locaux divers de type pompe à chaleur mais tous ces systèmes sont complexes et volumineux car ils mettent en oeuvre des échangeurs double flux air/air dans leurs circuits aérauliques. De plus, certains de ces systèmes sont réversibles, ce qui les rend encore plus complexes et ne peut pas permettre la production d'eau chaude notamment lorsqu'ils sont en mode de production de fraîcheur/froid. Enfin les deux derniers systèmes mentionnés utilisent des configurations lourdes avec, respectivement, un échangeur air/air rotatif plus deux condenseurs séparés ou une absence de possibilité de récupération de l'énergie disponible à l'extérieur. On connait également les documents WO2002/065026 et US 6 038 879.

Ainsi, l'invention concerne un système de ventilation double flux de production d'eau chaude sanitaire et de chauffage à pompe à chaleur pour un local.

Selon l'invention, le système est un module intégré destiné à être raccordé à des réseaux aérauliques et des canalisations d'eau sanitaire du local, ainsi qu'à une alimentation électrique, ledit système comportant des circuits aérauliques avec des entrées/sorties d'air, ledit système comportant en relation avec l'air extérieur au local, une entrée dans le système d'air extérieur dit air source, une sortie vers l'extérieur du système d'air du système dit air rejeté, ledit système comportant en relation avec l'air intérieur au local, une sortie vers l'intérieur du local d'air du système dit air soufflé, une première entrée dans le système d'air intérieur du local dit air repris et une seconde entrée dans le système d'air intérieur du local dit air vicié, ledit air vicié provenant de gaines d'évacuation d'air de type VMC, le circuit aéraulique d'air source étant raccordé au circuit aéraulique d'air soufflé et le circuit aéraulique d'air vicié se raccorde au circuit aéraulique d'air rejeté, le circuit aéraulique d'air source étant relié au circuit aéraulique d'air rejeté par un by-pass à ouverture/fermeture commandée, le circuit aéraulique d'air soufflé étant relié au circuit aéraulique d'air repris par un clapet à ouverture/fermeture commandée, le circuit aéraulique d'air rejeté comportant un second ventilateur et un second échangeur thermique air/fluide frigorigène, le by-pass arrivant en amont dudit second échangeur thermique et dudit second ventilateur sur le circuit aéraulique d'air rejeté, le circuit aéraulique d'air soufflé comportant un premier ventilateur et un premier échangeur thermique air/fluide frigorigène, le circuit aéraulique d'air repris en aval du clapet arrivant en amont dudit premier échangeur thermique et dudit premier ventilateur sur le circuit aéraulique d'air soufflé, le premier et le second échangeurs de chaleur étant reliés par un premier circuit de fluide frigorigène et un second circuit de fluide frigorigène, le premier circuit de fluide frigorigène comportant un compresseur pour faire circuler le fluide frigorigène entre le second échangeur et le premier échangeur et le second circuit de fluide frigorigène pour retour du fluide frigorigène du premier échangeur vers le second échangeur comportant un détendeur, et pour production de l'eau chaude sanitaire, un échangeur de chaleur fluide frigorigène/eau sanitaire est branché en dérivation sur le premier circuit de fluide frigorigène, une vanne trois voies réglable disposée en aval du compresseur permettant de régler le débit de fluide frigorigène vers l'échangeur de chaleur fluide frigorigène/eau sanitaire, l'échangeur de chaleur fluide frigorigène/eau sanitaire étant dans un ballon de stockage d'eau sanitaire chaude intégré dans le système, le système comportant en outre un moyen de gestion de son fonctionnement permettant de commander le by-pass à ouverture/fermeture commandée, le clapet à ouverture/fermeture commandée, le premier ventilateur, le second ventilateur, le compresseur et la vanne trois voies réglable.

Les termes amont et aval se réfèrent aux sens d'écoulement de l'air ou du fluide frigorigène dans les différents circuits aérauliques ou de fluide frigorigène. Le terme circuit de fluide frigorigène pour ce qui concerne les échangeurs de chaleur air/fluide frigorigène doit être compris comme un circuit véhiculant un fluide frigorigène à l'état liquide ou gazeux en fonction de sa pression ou de sa température. Ainsi, dans certaines applications particulières, certaines portions des circuits de fluide frigorigène peuvent en fait contenir du gaz comme ce peut être le cas lors de la détente de certains fluides frigorigènes.

Dans divers modes de mise en oeuvre de l'invention, les moyens suivants pouvant être utilisés seuls ou selon toutes les combinaisons techniquement possibles, sont employés :
- le moyen de gestion du fonctionnement du système est en plusieurs parties, au moins une des parties étant intégrée au système,
- dans le circuit aéraulique d'air rejeté, le second ventilateur est en amont du second échangeur thermique air/fluide frigorigène,
- dans le circuit aéraulique d'air rejeté, le second ventilateur est en aval du second échangeur thermique air/fluide frigorigène,
- dans le circuit aéraulique d'air soufflé, le premier ventilateur est en amont du premier échangeur thermique air/fluide frigorigène,
- dans le circuit aéraulique d'air soufflé, le premier ventilateur est en aval du premier échangeur thermique air/fluide frigorigène,
- pour le by-pass et/ou le clapet, l'ouverture/fermeture commandée est tout ou rien (soit ouvert, soit fermé),
- pour le by-pass et/ou le clapet, l'ouverture/fermeture commandée est par paliers (degré d'ouverture réglable par paliers),
- pour le by-pass et/ou le clapet, l'ouverture/fermeture commandée est proportionnelle (degré d'ouverture réglable en continu),
- pour un ou les ventilateurs, la commande est par paliers,
- pour un ou les ventilateurs, la commande est proportionnelle,
- le système comporte des moyens pour que la commande des ventilateurs soit par paliers ou proportionnelle,
- pour le compresseur, la commande est tout ou rien,
- pour le compresseur, la commande est par paliers,
- pour le compresseur, la commande est proportionnelle,
- le diamètre du circuit aéraulique d'air source est supérieur au diamètre du circuit aéraulique d'air soufflé,
- - le diamètre du circuit aéraulique d'air source est égal au diamètre du circuit aéraulique d'air soufflé,
- le diamètre du circuit aéraulique d'air rejeté est supérieur au diamètre du circuit aéraulique d'air vicié,
- le diamètre du circuit aéraulique d'air rejeté est égal au diamètre du circuit aéraulique d'air vicié,
- le système comporte en outre une sortie d'un circuit d'évacuation d'eau,
- le circuit d'évacuation d'eau est relié à un collecteur d'eau de condensation du second échangeur thermique air/fluide frigorigène,
- le circuit d'évacuation d'eau est relié à un robinet de purge du ballon de stockage d'eau sanitaire intégré dans le système,
- le système comporte en outre un robinet d'arrêt sur le circuit d'arrivée de l'eau en amont du ballon de stockage d'eau sanitaire intégré dans le système,
- le système comporte des moyens pour fixation sur un mur,
- le système comporte des moyens pour fixation sur un sol,
- le système comporte des moyens pour fixation au plafond,
- le système comporte en outre au moins un capteur de température,
- le système comporte en outre un capteur de température vers la sortie du circuit aéraulique d'air soufflé,
- le système comporte en outre un capteur de température vers l'entrée du circuit aéraulique d'air source,
- le système comporte en outre un capteur de température dans le ballon de stockage d'eau sanitaire intégré dans le système.

L'invention concerne également un procédé qui se présente selon les modalités qui suivent.

Le procédé de mise en oeuvre d'un système de ventilation double flux de production d'eau chaude sanitaire et de chauffage à pompe à chaleur pour un local, est tel que l'on met en oeuvre le système selon l'une ou plusieurs des caractéristiques décrites et que :
- le premier ventilateur et le second ventilateur sont en marche permanente, le débit de ventilation variant en fonction des besoins,
- dans le cas où il n'y a pas besoin de chauffage et d'eau chaude sanitaire, le by-pass et le clapet sont fermés, le compresseur étant arrêté,
- dans le cas où il y a un faible besoin de chauffage, le by-pass est ouvert et le clapet reste fermé, le compresseur étant en marche,
- dans le cas où il y a un fort besoin de chauffage, le by-pass et le clapet sont ouverts, le compresseur étant en marche.

Dans des variantes, possiblement combinées :
- dans le cas où il y a besoin d'eau chaude sanitaire, le by-pass est ouvert et le clapet est fermé, le compresseur étant en marche, et la vanne trois voies envoie du fluide frigorigène du premier circuit de fluide frigorigène vers l'échangeur de chaleur fluide frigorigène/eau sanitaire,
- lorsqu'à la fois un besoin de chauffage et un besoin d'eau chaude sanitaire sont présents, le chauffage est prioritaire,
- lorsqu'à la fois un besoin de chauffage et un besoin d'eau chaude sanitaire sont présents, l'eau chaude sanitaire est prioritaire,
- lorsqu'à la fois un besoin de chauffage et un besoin d'eau chaude sanitaire sont présents, le by-pass et le clapet sont ouverts, le compresseur étant en marche, et la vanne trois voies envoie du fluide frigorigène du premier circuit de fluide frigorigène vers l'échangeur de chaleur fluide frigorigène/eau sanitaire.

Le système de l'invention du fait de sa simplicité et qu'il ne comporte pas d'échangeur double flux air/air est compact et peut être mis en oeuvre dans un module de taille réduite, ballon d'eau chaude compris, pouvant s'intégrer dans une partie d'un ensemble meuble de cuisine par exemple. Le système de l'invention malgré sa simplicité et compacité est particulièrement efficace puisqu'il peut tirer de l'énergie de toutes les sources disponibles, aussi bien internes qu'externe et, cela, pour assurer aussi bien le chauffage de l'habitation que la production d'eau chaude sanitaire.

La présente invention, sans qu'elle en soit pour autant limitée, va maintenant être exemplifiée avec la description qui suit de modes de réalisation et de mise en oeuvre en relation avec :
la Figure 1 qui représente schématiquement le système de l'invention, et
la Figure 2 qui représente schématiquement une mise en oeuvre particulière du système de l'invention dans le cas d'un local d'habitation de plusieurs pièces.

Le système 1 de l'invention, dénommé PAC.R² ®, se présente sous forme d'un module de taille relativement réduite intégrant des moyens permettant une ventilation double flux, la production d'eau chaude sanitaire et le chauffage avec pompe à chaleur. Ce module peut être installé dans un local d'habitation, par exemple dans une cuisine ou une pièce dédiée, voire dans un faux plafond. Il est configuré pour être raccordé à des réseaux aérauliques et des canalisations d'eau sanitaire du local, ainsi qu'à une alimentation électrique. Les réseaux aérauliques sont typiquement pour ce qui concerne l'air à l'intérieur du local, une canalisation de soufflage d'air vers les pièces du local, une gaine de récupération d'air vicié de type VMC et une canalisation spécifique de récupération d'air à l'intérieur du local. Les réseaux aérauliques sont typiquement pour ce qui concerne l'air à l'extérieur du local, une canalisation d'air source provenant de l'extérieur du local et une canalisation de rejet d'air vers l'extérieur du local.

Le système 1 comporte intérieurement des circuits aérauliques avec des entrées/sorties d'air pour connexion avec les réseaux aérauliques du local. Ainsi, en relation avec l'air extérieur au local, le système comporte :
- une entrée 2 dans le système d'air extérieur, dit air source, connectée à la canalisation d'air source, et
- une sortie 3 vers l'extérieur du système d'air du système, dit air rejeté, connectée à la canalisation de rejet d'air vers l'extérieur du local.

En relation avec l'air intérieur au local, le système comporte :
- une sortie 4 vers l'intérieur du local d'air du système, dit air soufflé, connectée à la canalisation de soufflage d'air,
- une première entrée 5 dans le système d'air intérieur du local, dit air repris, connectée à la canalisation spécifique de récupération d'air à l'intérieur du local, et
- une seconde entrée 6 dans le système d'air intérieur du local, dit air vicié, connectée à la gaine d'évacuation d'air de type VMC.

Dans le système, le circuit aéraulique d'air source est relié au circuit aéraulique d'air rejeté par un by-pass 7 à ouverture/fermeture commandée électriquement et le circuit aéraulique d'air soufflé est relié au circuit aéraulique d'air repris par un clapet 8 à ouverture/fermeture commandée électriquement.

Le circuit aéraulique d'air soufflé comporte un premier ventilateur 9 et un premier échangeur thermique air/fluide frigorigène 11, le circuit aéraulique d'air repris d'aval du clapet 8 arrivant en amont dudit premier échangeur thermique 11 et dudit premier ventilateur 9 sur le circuit aéraulique d'air soufflé. Dans cet exemple, le premier échangeur thermique 11 est en amont dudit premier ventilateur 9. Dans une variante, l'inverse est mis en oeuvre.

Le circuit aéraulique d'air rejeté comporte un second ventilateur 10 et un second échangeur thermique air/fluide frigorigène 12, le by-pass arrivant en amont dudit second échangeur thermique 12 et dudit second ventilateur 10 sur le circuit aéraulique d'air rejeté. Dans cet exemple, le second échangeur thermique 12 est en aval dudit second ventilateur 10. Dans une variante, l'inverse est mis en oeuvre. Les ventilateurs sont, par exemple, de type turbine.

Dans l'exemple donné, le circuit aéraulique d'air source se raccorde au circuit aéraulique d'air soufflé au niveau d'une première restriction de passage 19, et le circuit aéraulique d'air vicié se raccorde au circuit aéraulique d'air rejeté au niveau d'une seconde restriction de passage 20. Dans d'autres modalités de réalisation du système de l'invention, ces restrictions sont absentes.

Le premier 11 et le second 12 échangeurs de chaleur sont reliés par un premier circuit de fluide frigorigène et un second circuit de fluide frigorigène. Le premier circuit de fluide frigorigène comporte un compresseur 13 électrique pour faire circuler le fluide frigorigène entre le second échangeur et le premier échangeur. Le second circuit de fluide frigorigène pour retour du fluide frigorigène du premier échangeur vers le second échangeur comporte un détendeur 14.

Pour production de l'eau chaude sanitaire, un échangeur de chaleur fluide frigorigène/eau sanitaire 16 est branché en dérivation parallèle sur le premier circuit de fluide frigorigène, une vanne trois voies 15 réglable électriquement étant disposée en aval du compresseur 13 et permettant de régler le débit de fluide frigorigène vers l'échangeur de chaleur fluide frigorigène/eau sanitaire 16. L'échangeur de chaleur fluide frigorigène/eau sanitaire est dans un ballon 17 de stockage d'eau sanitaire chaude intégré dans le système. Le ballon reçoit en amont de l'eau froide sanitaire, EFS, et produit en aval de l'eau chaude sanitaire, ECS. De préférence, un robinet d'arrêt et un purgeur sont disposés en amont du ballon 17.

Le système comporte en outre un moyen de gestion de son fonctionnement permettant de commander le by-pass 7 à ouverture/fermeture commandée, le clapet 8 à ouverture/fermeture commandée, le premier ventilateur 9, le second ventilateur 10, le compresseur 13 et la vanne trois voies 15 réglable. Ce moyen de gestion est typiquement un automate relié à un/des capteurs et agissant en fonction d'une éventuelle programmation par les occupants du local (horaire de mise en fonctionnement, activation en heures creuses, seuils de température...). Pendant le fonctionnement du système, le premier ventilateur et le second ventilateur sont en marche permanente, le débit de ventilation variant en fonction des besoins. Les débits minimaux des ventilateurs correspondent au débit de base du système.

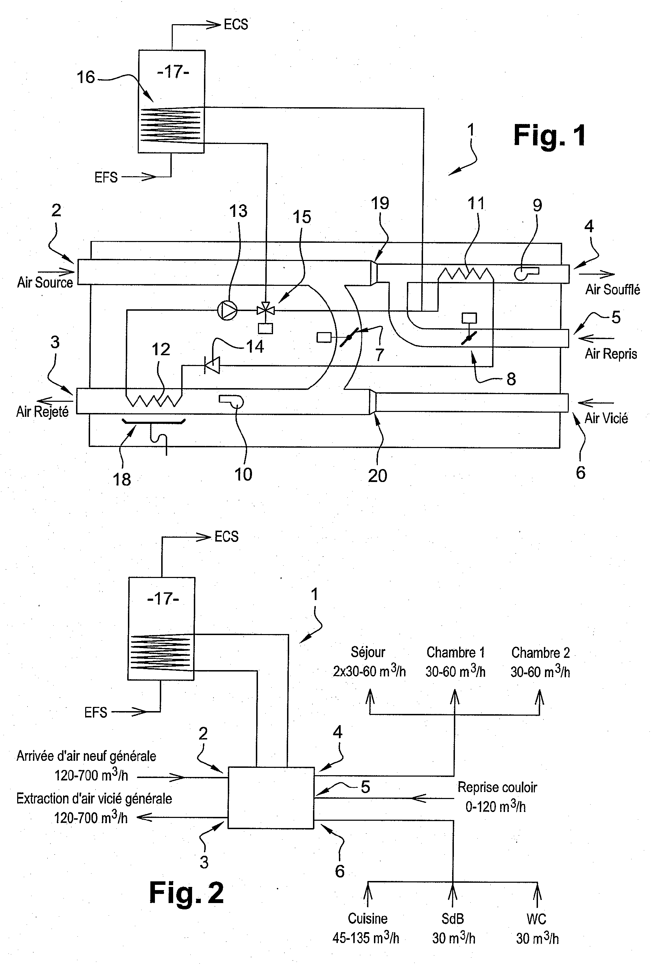

Comme représenté Figure 2, la canalisation de soufflage d'air vers les pièces du local est reliée à un séjour, une première chambre et une seconde chambre. Des moyens de réglage de débit permettent de répartir le flux d'air soufflé par le système entre ces différentes pièces et typiquement, respectivement, 2x (30 à 60) m³/h, 30 à 60 m³/h, 30 à 60 m³/h. La gaine de récupération d'air vicié de type VMC est reliée aux pièces suivantes : la cuisine, la salle de bains et les WC. Ici encore, des moyens de réglage de débit permettent de répartir le flux d'air vicié aspiré par le système entre ces différentes pièces et typiquement, respectivement, 45 à 135 m³/h, 30 m³/h, 30 m³/h. La canalisation spécifique de récupération d'air à l'intérieur du local débouche dans un couloir du local et permet une reprise d'air typiquement comprise entre 0 et 120 m³/h. Pour ce qui concerne l'air à l'extérieur du local, la canalisation d'air source permet une aspiration d'air extérieur typiquement de 120 à 700 m³/h et la canalisation de rejet d'air vers l'extérieur du local permet un rejet typiquement de 120 à 700 m³/h.

Bien entendu la présente invention n'est pas limitée aux modes de réalisation particuliers qui viennent d'être décrits. Ainsi, on comprend bien que l'invention peut être déclinée selon de nombreuses autres possibilités sans pour autant sortir du cadre défini par les revendications. Par exemple, outre les possibilités de chauffage, le système de l'invention peut être configuré pour apporter de la fraîcheur dans les pièces par la sortie d'air soufflé par exemple via l'utilisation de deux vannes d'inversion de cycle qui sont rajoutées au système.

## Revendications

1. Système (1) de ventilation double flux de production d'eau chaude sanitaire et de chauffage à pompe à chaleur pour un local, le système étant un module intégré destiné à être raccordé à des réseaux aérauliques et des canalisations d'eau sanitaire du local ainsi qu'à une alimentation électrique,
ledit système comportant des circuits aérauliques avec des entrées/sorties d'air,
ledit système comportant en relation avec l'air extérieur au local, une entrée (2) dans le système d'air extérieur dit air source, une sortie (3) vers l'extérieur du système d'air du système dit air rejeté,
ledit système comportant en relation avec l'air intérieur au local, une sortie (4) vers l'intérieur du local d'air du système dit air soufflé, une première entrée (5) dans le système d'air intérieur du local dit air repris et une seconde entrée (6) dans le système d'air intérieur du local dit air vicié, ledit air vicié provenant de gaines d'évacuation d'air de type VMC,
le circuit aéraulique d'air source étant raccordé au circuit aéraulique d'air soufflé et le circuit aéraulique d'air vicié se raccorde au circuit aéraulique d'air rejeté,
le circuit aéraulique d'air source étant relié au circuit aéraulique d'air rejeté par un by-pass (7) à ouverture/fermeture commandée,
le circuit aéraulique d'air soufflé étant relié au circuit aéraulique d'air repris par un clapet (8) à ouverture/fermeture commandée,
le circuit aéraulique d'air rejeté comportant un second ventilateur (10) et un second échangeur thermique air/fluide frigorigène (12), le by-pass arrivant en amont dudit second échangeur thermique (12) et dudit second ventilateur (10) sur le circuit aéraulique d'air rejeté,
le circuit aéraulique d'air soufflé comportant un premier ventilateur (9) et un premier échangeur thermique air/fluide frigorigène (11), le circuit aéraulique d'air repris d'aval du clapet (8) arrivant en amont dudit premier échangeur thermique (11) et dudit premier ventilateur (9) sur le circuit aéraulique d'air soufflé,
le premier (11) et le second (12) échangeurs de chaleur étant reliés par une première partie de circuit de fluide frigorigène et une seconde partie de circuit de fluide frigorigène, la première partie de circuit de fluide frigorigène comportant un compresseur (13) pour faire circuler le fluide frigorigène entre le second échangeur et le premier échangeur et la seconde partie de circuit de fluide frigorigène pour retour du fluide frigorigène du premier échangeur vers le second échangeur comportant un détendeur (14), et
en ce que, pour production de l'eau chaude sanitaire, un échangeur de chaleur fluide frigorigène/eau sanitaire (16) est branché en dérivation parallèle sur la première partie de circuit de fluide frigorigène, une vanne trois voies (15) réglable disposée en aval du compresseur (13) permettant de régler le débit de fluide frigorigène vers l'échangeur de chaleur fluide frigorigène/eau sanitaire (16), l'échangeur de chaleur fluide frigorigène/eau sanitaire étant dans un ballon (17) de stockage d'eau sanitaire chaude intégré dans le système,
le système comportant en outre un moyen de gestion de son fonctionnement permettant de commander le by-pass (7) à ouverture/fermeture commandée, le clapet (8) à ouverture/fermeture commandée, le premier ventilateur (9), le second ventilateur (10), le compresseur (13) et la vanne trois voies (15) réglable.

2. Système selon la revendication 1, **caractérisé en ce que** dans le circuit aéraulique d'air rejeté, le second ventilateur (10) est en amont du second échangeur thermique air/fluide frigorigène (12), et dans le circuit aéraulique d'air soufflé, le premier ventilateur (9) est en amont du premier échangeur thermique air/fluide frigorigène (11).

3. Système selon la revendication 1 ou 2, **caractérisé en ce qu'**il comporte des moyens pour que la commande des ventilateurs soit par paliers ou proportionnelle.

4. Système selon la revendication 1, 2 ou 3, **caractérisé en ce que** le système comporte en outre une sortie d'un circuit d'évacuation d'eau, ledit circuit d'évacuation d'eau étant relié à un collecteur (18) d'eau de condensation du second échangeur thermique air/fluide frigorigène (12).

5. Système selon la revendication 4, **caractérisé en ce que** le circuit d'évacuation d'eau est en outre relié à un robinet de purge du ballon (17) de stockage d'eau sanitaire intégré dans le système.

6. Système selon l'une quelconque des revendications précédentes, **caractérisé en ce qu'**il comporte des moyens pour fixation sur l'un ou plusieurs des éléments suivants : un mur, un sol, un plafond.

7. Système selon l'une quelconque des revendications précédentes, **caractérisé en ce qu'**il comporte en outre au moins un capteur de température.

8. Procédé de mise en oeuvre d'un système de ventilation double flux de production d'eau chaude sanitaire et de chauffage à pompe à chaleur pour un local, **caractérisé en ce que** l'on met en oeuvre le système (1) de l'une quelconque des revendications précédentes et que :
- le premier ventilateur et le second ventilateur sont en marche permanente, le débit de ventilation variant en fonction des besoins,
- dans le cas où il n'y a pas besoin de chauffage et d'eau chaude sanitaire, le by-pass (7) et le clapet (8) sont fermés, le compresseur (13) étant arrêté,
- dans le cas où il y a un faible besoin de chauffage, le by-pass (7) est ouvert et le clapet (8) reste fermé, le compresseur (13) étant en marche,
- dans le cas où il y a un fort besoin de chauffage, le by-pass (7) et le clapet (8) sont ouverts, le compresseur (13) étant en marche.

9. Procédé selon la revendication 8, **caractérisé en ce que** dans le cas où il y a besoin d'eau chaude sanitaire, le by-pass (7) est ouvert et le clapet (8) est fermé, le compresseur (13) étant en marche, et la vanne trois voies (15) envoie du fluide frigorigène de la première partie de circuit de fluide frigorigène vers l'échangeur de chaleur fluide frigorigène/eau sanitaire (16).

10. Procédé selon la revendication 8, **caractérisé en ce que** lorsqu'à la fois un besoin de chauffage et un besoin d'eau chaude sanitaire sont présents, le by-pass (7) et le clapet (8) sont ouverts, le compresseur (13) étant en marche, et la vanne trois voies (15) envoie du fluide frigorigène de la première partie de circuit de fluide frigorigène vers l'échangeur de chaleur fluide frigorigène/eau sanitaire (16).

## Patentansprüche

1. Belüftungssystem (1) mit doppeltem Luftstrom für die Heißwasserbereitung für den Haushalt und zur Heizung mit integrierter Wärmepumpe für einen Raum,
wobei das System ein integriertes System ist, das dazu bestimmt ist, an luftführende Netze und Wasserleitungen des Raums und an eine Stromversorgung angeschlossen zu werden,
wobei das System luftführende Kreise mit Luftein- und -ausgängen aufweist,
wobei das System in Bezug auf die Luft außerhalb des Raums für Außenluft, sogenannte Zuluft, einen Eintritt (2) in das System und für Luft des Systems, sogenannte Abluft, einen Austritt (3) nach außerhalb des Systems aufweist,
wobei das System in Bezug auf die Luft innerhalb des Raums für Luft des Systems, sogenannte ausgeblasene Luft, einen Austritt (4) zum Inneren des Raums, für Innenluft des Raums, sogenannte abgeführte Luft, einen ersten Eintritt (5) in das System und für Innenluft des Raums, sogenannte verbrauchte Luft, einen zweiten Eintritt (6) in das System aufweist, wobei die verbrauchte Luft aus Abluftleitungen vom Typ der Zwangsbelüftung stammt,
wobei der luftführende Kreis für Zuluft mit dem luftführenden Kreis für ausgeblasene Luft verbunden ist und der luftführende Kreis für verbrauchte Luft an den luftführenden Kreis für Abluft angeschlossen wird,
wobei der luftführende Kreis für Zuluft über einen auf Öffnung/Schließung gesteuerten Bypass (7) mit dem luftführenden Kreis für Abluft verbunden ist,
wobei der luftführende Kreis für ausgeblasene Luft über eine auf Öffnung/Schließung gesteuerte Klappe (8) mit dem luftführenden Kreis für abgeführte Luft verbunden ist,
wobei der luftführende Kreis für Abluft einen zweiten Ventilator (10) und einen zweiten Luft/Kühlflüssigkeit-Wärmetauscher (12) aufweist, wobei der Bypass stromaufwärts vom zweiten Wärmetauscher (12) und vom zweiten Ventilator (10) auf den luftführenden Kreis für Abluft stößt,
wobei der luftführende Kreis für ausgeblasene Luft einen ersten Ventilator (9) und einen ersten Luft/Kühlflüssigkeit-Wärmetauscher (11) aufweist, wobei der stromabwärts der Klappe (8) gelegene luftführende Kreis stromaufwärts des ersten Wärmetauschers (11) und des ersten Ventilators (9) auf den luftführenden Kreis für ausgeblasene Luft stößt,
wobei der erste (11) und der zweite (12) Wärmetauscher über einen ersten Teil eines Kühlflüssigkeitskreises und über einen zweiten Teil des Kühlflüssigkeitskreises verbunden sind, wobei der erste Teil des Kühlflüssigkeitskreises einen Kompressor (13) aufweist, um die Kühlflüssigkeit zwischen dem zweiten Tauscher und dem ersten Tauscher fließen zu lassen, und der zweite Teil des Kühlflüssigkeitskreises für den Rückfluß der Kühlflüssigkeit vom ersten Tauscher zum zweiten Tauscher einen Druckminderer (14) aufweist, und
wobei für die Bereitung von Heißwasser für den Haushalt ein Kühlflüssigkeit/Haushaltswasser-Wärmetauscher (16) parallel zum ersten Teil des Kühlflüssigkeitskreises angeschlossen ist, wobei ein stromabwärts des Kompressors (13) angeordnetes regelbares Drei-Wege-Ventil (15) ermöglicht, den Kühlflüssigkeitsdurchsatz zum Kühlflüssigkeit/Haushaltswasser-Wärmetauscher (16) zu regeln, wobei sich der Kühlflüssigkeit/Haushaltswasser-Wärmetauscher in einem in dem System integrierten Heißwasserspeicherballon (17) befindet,
wobei das System außerdem ein Mittel zum Steuern seines Betriebs aufweist, das ermöglicht, den auf Öffnung/Schließung gesteuerten Bypass (7), die auf Öffnung/Schließung gesteuerte Klappe (8), den ersten Ventilator (9), den zweiten Ventilator (10), den Kompressor (13) und das regelbare Drei-Wege-Ventil (15) zu steuern.

2. System gemäß Anspruch 1, **dadurch gekennzeichnet, daß** im luftführenden Kreis für Abluft der zweite Ventilator (10) stromaufwärts des zweiten Luft/Kühlflüssigkeits-Wärmetauschers (12) und im luftführenden Kreis für ausgeblasene Luft der erste Ventilator (9) stromaufwärts des ersten Luft/Kühlflüssigkeits-Wärmetauschers (11) angeordnet ist.

3. System gemäß Anspruch 1 oder 2, **dadurch gekennzeichnet, daß** es Mittel aufweist, damit die Steuerung der Ventilatoren stufenweise oder proportional erfolgt.

4. System gemäß Anspruch 1, 2 oder 3, **dadurch gekennzeichnet, daß** das System außerdem einen Auslaß eines Entwässerungskreises aufweist, wobei der Entwässerungskreis mit einem Kondenswassersammler (18) des zweiten Luft/Kühlflüssigkeits-Wärmetauschers (12) verbunden ist.

5. System gemäß Anspruch 4, **dadurch gekennzeichnet, daß** der Entwässerungskreis außerdem mit einem Ablaßhahn des im System integrierten Haushaltswasserspeicherballons (17) verbunden ist.

6. System gemäß einem der vorangehenden Ansprüche, **dadurch gekennzeichnet, daß** es Mittel zur Befestigung an einem oder mehreren der folgenden Elemente aufweist: eine Mauer, ein Boden, eine Decke.

7. System gemäß einem der vorangehenden Ansprüche, **dadurch gekennzeichnet, daß** es außerdem wenigstens einen Temperaturfühler aufweist.

8. Verfahren zum Betreiben eines Belüftungssystems mit doppeltem Luftstrom für die Heißwasserbereitung für den Haushalt und zur Heizung mit Wärmepumpe für einen Raum, **dadurch gekennzeichnet, daß** das System (1) gemäß einem der vorangehenden Ansprüche betrieben wird und daß
- der erste Ventilator und der zweite Ventilator dauerhaft in Betrieb sind und daß der Lüftungsdurchsatz in Abhängigkeit vom Bedarf variiert,
- im Falle, daß keine Heizung und kein Heißwasser benötigt werden, der Bypaß (7) und die Klappe (8) geschlossen sind, wobei der Kompressor (13) abgeschaltet ist,
- im Falle eines schwachen Bedarfs an Heizung der Bypaß (7) geöffnet ist und die Klappe (8) geschlossen ist, wobei der Kompressor (13) eingeschaltet ist,
- im Falle eines starken Bedarfs an Heizung der Bypaß (7) und die Klappe (8) geöffnet sind, wobei der Kompressor (13) eingeschaltet ist.

9. Verfahren gemäß Anspruch 8, **dadurch gekennzeichnet, daß** im Falle eines Bedarfs an Heißwasser für den Haushalt der Bypaß (7) geöffnet ist und die Klappe (8) geschlossen ist, wobei der Kompressor (13) eingeschaltet ist, und das Drei-Wege-Ventil (15) Kühlflüssigkeit aus dem ersten Teil des Kühlflüssigkeitskreises zum Kühlflüssigkeit/Haushaltswasser-Wärmetauscher (16) schickt.

10. Verfahren gemäß Anspruch 8, **dadurch gekennzeichnet, daß** im Falle, daß gleichzeitig ein Bedarf an Heizung und ein Bedarf an Heißwasser bestehen, der Bypaß (7) und die Klappe (8) geöffnet sind, wobei der Kompressor (13) eingeschaltet ist, und das Drei-Wege-Ventil (15) Kühlflüssigkeit aus dem ersten Teil des Kühlflüssigkeitskreises zum Kühlflüssigkeit/Haushaltswasser-Wärmetauscher (16) schickt.

## Claims

1. A dual-flow ventilation system (1) for domestic hot water production and for heat-pump heating for premises,
the system being an integrated module intended to be connected to aeraulic networks and to domestic water ducts of the premises, as well as to a power supply,
said system including aeraulic circuits with air inlets/outlets,
said system including, in relation with the air from outside the premises, an inlet (2) for the entry into the system of outside air, called "source air", an outlet (3) for the exit out of the system of air from the system, called "rejected air",
said system including, in relation with the air from inside the premises, an outlet (4) for the exit towards the inside of the premises of air from the system, called "blown air", a first inlet (5) for the entry into the system of air from the inside of the premises, called "return air", and a second inlet (6) for the entry into the system of air from the inside of the premises, called "foul air", said foul air coming from air delivery pipes of the mechanical ventilation type,
the source air aeraulic circuit being connected to the blown air aeraulic circuit and the foul air aeraulic circuit being connected to the rejected air aeraulic circuit,
the source air aeraulic circuit being connected to the rejected air aeraulic circuit by a controlled opening/closing by-pass (7),
the blown air aeraulic circuit being connected to the return air aeraulic circuit by a controlled opening/closing flap (8),
the rejected air aeraulic circuit including a second fan (10) and a second air/refrigerant fluid heat exchanger (12), the by-pass arriving upstream from said second heat exchanger (12) and said second fan (10) in the rejected air aeraulic circuit,
the blown air aeraulic circuit including a first fan (9) and a first air/refrigerant fluid exchanger (11), the return air aeraulic circuit downstream the flap (8) arriving upstream from said first heat exchanger (11) and said first fan (9) in the blown air aeraulic circuit,
the first (11) and the second (12) heat exchangers being connected by a first portion of refrigerant fluid circuit and a second portion of refrigerant fluid circuit, the first portion of refrigerant fluid circuit including a compressor (13) to make the refrigerant fluid circulate between the second exchanger and the first exchanger and the second portion of refrigerant fluid circuit for the return of the refrigerant fluid from the first exchanger to the second exchanger including an expander (14), and
in that, for domestic hot water production, a refrigerant fluid/domestic water heat exchanger (16) is bypassed to the first portion of refrigerant fluid circuit, an adjustable three-way control valve (15) arranged downstream the compressor (13) being operable to adjust the refrigerant fluid flow rate to the refrigerant fluid/domestic water heat exchanger (16), the refrigerant fluid/domestic water heat exchanger being in a domestic hot water storage tank (17) integrated into the system,
the system further including a means for managing its operation, operable to control the controlled opening/closing bypass (7), the controlled opening/closing flap (8), the first fan (9), the second fan (10), the compressor (13) and the adjustable three-way control valve (15).

2. The system according to claim 1, **characterized in that**, in the rejected air aeraulic circuit, the second fan (10) is upstream from the second air/refrigerant fluid heat exchanger (12), and in the blown air aeraulic circuit, the first fan (9) is upstream from the first air/refrigerant fluid heat exchanger (11).

3. The system according to claim 1 or 2, **characterized in that** it includes means for either a step-by-step or a proportional control of the fans.

4. The system according to claim 1, 2 or 3, **characterized in that** the system further includes a water evacuation circuit outlet, said water evacuation circuit being connected to a condensed water tank (18) of the second air/refrigerant fluid heat exchanger (12).

5. The system according to claim 4, **characterized in that** the water evacuation circuit is further connected to a drain cock of the domestic hot water storage tank (17) integrated into the system.

6. The system according to any one of the preceding claims, **characterized in that** it includes means for the fastening to one or several of the following elements: a wall, a floor, a ceiling.

7. The system according to any one of the preceding claims, **characterized in that** it further includes at least one temperature sensor.

8. A method for implementing a dual-flow ventilation system for domestic hot water production and for heat-pump heating for premises, **characterized in that** the system (1) according to any one of the preceding claims is implemented and **in that**:
- the first fan and the second fan are always on, the ventilation flow rate varying according to the needs,
- in the case where there is no need for heating and for domestic hot water, the bypass (7) and the flap (8) are closed, the compressor (13) being off,
- in the case where there is a small need for heating, the bypass (7) is open and the flap (8) stays closed, the compressor (13) being on,
- in the case where there is a strong need for heating, the bypass (7) and flap (8) are open, the compressor (13) being on.

9. The method according to claim 8, **characterized in that**, in the case where there is a need for domestic hot water, the bypass (7) is open and the flap (8) is closed, the compressor (13) being on, and three-way control valve (15) sends refrigerant fluid from the first portion of refrigerant fluid circuit to the refrigerant fluid/domestic water heat exchanger (16).

10. The method according to claim 8, **characterized in that**, when both a need for heating and a need for domestic hot water are present, the bypass (7) and the flap (8) are open, the compressor (13) being on, and three-way control valve (15) sends refrigerant fluid from the first portion of refrigerant fluid circuit to the refrigerant fluid/domestic water heat exchanger (16).
